**Europäisches Patentamt**

**European Patent Office**

**Office européen des brevets**

(19)

(11) Numéro de publication : **0 410 980 B1**

(12)

# FASCICULE DE BREVET EUROPEEN

(45) Date de publication du fascicule du brevet :
**12.08.92 Bulletin 92/33**

(51) Int. Cl.$^5$ : **G06K 1/12**

(21) Numéro de dépôt : **89903717.0**

(22) Date de dépôt : **25.03.89**

(86) Numéro de dépôt international :
**PCT/EP89/00334**

(87) Numéro de publication internationale :
**WO 89/09978 19.10.89 Gazette 89/25**

(54) **PROCEDE D'IMPRESSION MAGNETOGRAPHIQUE ET APPAREIL POUR LA MISE EN OEUVRE DU PROCEDE.**

(30) Priorité : **13.04.88 FR 8805110**

(43) Date de publication de la demande :
**06.02.91 Bulletin 91/06**

(45) Mention de la délivrance du brevet :
**12.08.92 Bulletin 92/33**

(84) Etats contractants désignés :
**AT BE CH DE FR GB IT LI LU NL SE**

(56) Documents cités :
**EP-A- 0 223 692**
**FR-A- 2 561 007**
**US-A- 3 735 416**
**US-A- 3 858 514**
**US-A- 4 366 488**

(73) Titulaire : **KODAK-PATHE**
**60/1 - Zone Industrielle**
**F-71102 Chalon-sur-Saone Cédex (FR)**
(84) **FR**
Titulaire : **EASTMAN KODAK COMPANY**
**343 State Street**
**Rochester, New York 14650-2201 (US)**
(84) **BE CH DE GB IT LI LU NL SE AT**

(72) Inventeur : **EID, Bernard**
**13, rue des Fours-du-Roy**
**F-77430 Champagne-sur-Seine (FR)**
Inventeur : **VAU, Jean-Marie**
**Kodak-Pathé CRT - Zone Industrielle**
**F-71102 Chalon-sur-Saône (FR)**

(74) Mandataire : **Buff, Michel et al**
**Kodak-Pathé Département des Brevets et**
**Licences CRT Centre de Recherches et de**
**Technologie Zone Industrielle**
**F-71102 Chalon sur Saône Cédex (FR)**

EP 0 410 980 B1

Jouve, 18, rue Saint-Denis, 75001 PARIS

## Description

L'invention est relative à un procédé d'impression magnétographique (notamment de codes à barres) mettant en oeuvre un agencement de têtes magnétiques d'écriture et d'effacement.

Dans la technique antérieure, il existe diverses manières de réaliser des codes à barres. Nous retiendrons seulement les quatre plus courantes :

– l'impression de codes à barres par jet d'encre : cette méthode qui ne permet pas d'obtenir une résolution inférieure au diamètre de la goutte d'encre, à savoir environ 120 μm, présente en plus l'inconvénient de ne pas autoriser une hauteur de codes à barres supérieure à 8 mm par tête. Aussi, pour obtenir une hauteur de codes à barres supérieure, il faudra utiliser plusieurs têtes en cascade ;

– le code à barres par impression thermique : le brevet US 4 661 001 décrit l'utilisation d'une tête thermique pour réaliser de tels codes. Lors d'une impression en continu, cette méthode présente l'inconvénient de ne pas permettre des vitesses d'impression très grandes. Il sera en effet difficile d'aller au-delà de 10 cm/seconde. De plus, l'impression obtenue par voie thermique n'est pas très stable dans le temps ;

– l'imprimante laser est aussi utilisée pour réaliser des codes à barres. Cette méthode ne permet pas la mise en oeuvre d'une impression en continu ;

– il est connu également d'utiliser l'impression matricielle, c'est-à-dire point par point, pour réaliser des codes à barres ; cependant, cette méthode présente l'inconvénient d'offrir une résolution graphique insuffisante (de l'ordre de 250 μm). Aussi les résultats, en ce qui concerne la qualité d'impression, se révèlent pour certaines applications nettement insuffisants.

D'autre part, il existe des dispositifs mettant en oeuvre un agencement de têtes magnétiques de lecture/écriture et de têtes magnétiques d'effacement. Le brevet FR 2 583 550 décrit en effet l'agencement de telles têtes. Dans ce brevet, relatif à un dispositif de lecture de cartes de crédit et de détection d'usages frauduleux de ces cartes, après un premier passage de la tête de lecture, on compare le numéro de code confidentiel de l'utilisateur avec le numéro de la carte et avec une série de numéros présents sur une liste de rejets. S'il s'avère qu'il s'agit d'un usage frauduleux, on effectue un second passage au cours duquel on efface au moins une piste de la carte afin de la rendre inutilisable. Mais ce brevet ne contient pas d'indications relatives à l'utilisation simultanée d'une tête d'effacement et d'une tête d'écriture sur un même support magnétique comme tel est le cas dans la présente invention.

Le brevet US-A-3 735 416 décrit un système d'impression magnétique comprenant des moyens coopérant avec le support d'impression pour enregistrer des informations et des moyens pour effacer des informations présentes sur ledit support. Un tel système ne permet pas en un seul passage de réaliser une image latente composée de deux séries d'informations dont l'une est au moins partiellement imbriquée dans l'autre.

Aussi, la présente invention se propose-t-elle de remédier aux inconvénients précités de la technique antérieure

– en fournissant la possibilité d'imprimer des informations de natures diverses sur une bande magnétique à l'aide d'un agencement de têtes d'écriture et de têtes d'effacement et ce, au cours d'un seul passage de la bande magnétique devant les têtes ;

– en permettant en continu une impression magnétographique à une vitesse supérieure à ce qui existe dans la technique antérieure (en effet, par le procédé selon l'invention on peut atteindre une vitesse de l'ordre de 1 m/s) et en particulier comprise entre 20 cm/s et 100 cm/s ;

– en fournissant un procédé d'impression offrant une grande stabilité et permettant une résolution graphique intéressante (de l'ordre de 75 μm).

D'autres objets de l'invention apparaîtront au cours de la description qui va suivre.

Cette invention est donc relative à un procédé de formation sur une bande magnétique d'une image latente, à l'aide d'un assemblage de têtes magnétiques d'effacement et de têtes magnétiques d'enregistrement, ledit procédé étant caractérisé en ce que pour former une image latente composée de deux séries d'informations, l'une étant au moins partiellement imbriquée dans l'autre et ce, au cours d'un seul passage de la bande magnétique devant les têtes, le procédé comprend les étapes suivantes :

a) l'enregistrement d'une première information sur une surface donnée de la bande magnétique ;

b) l'effacement, dans la zone d'imbrication des deux séries d'information, d'une partie de l'information écrite au cours de l'étape (a) ;

c) l'enregistrement d'une seconde information dont au moins une partie se trouve dans la zone effacée au cours de l'étape (b).

La description qui va suivre fait référence à un dispositif d'impression de codes à barres selon la norme EAN mettant en oeuvre le procédé selon l'invention, mais il est évident que ce procédé peut également être mis en oeuvre pour d'autres applications. La description se réfère aux dessins qui l'accompagnent dans lesquels :

la fig. 1 représente à titre d'exemple le genre de codes à barres que l'on peut obtenir en mettant en oeuvre le procédé selon l'invention ;

la fig. 2 représente un schéma synoptique de l'appareil utilisé pour la mise en oeuvre du procédé selon l'invention. Pour la clarté du dessin, chaque partie de l'appareil, formant les diverses stations, est représentée de manière très simplifiée ;

la fig. 3 illustre une disposition possible des têtes magnétiques pour la mise en oeuvre du procédé selon l'invention ;

la fig. 4 illustre la façon dont est généré le signal que l'on applique aux têtes d'écriture ;

la fig. 4a illustre la forme des signaux de commande que l'on envoie pour piloter les têtes magnétiques ;

la fig. 5 illustre de manière schématique les différentes étapes permettant de générer le signal de modulation que l'on superpose au signal de polarisation pour obtenir le signal d'écriture ;

la fig. 6 illustre la façon dont est généré le signal que l'on applique à la tête d'effacement ;

la fig. 7 illustre sous forme de diagramme l'architecture du système utilisé pour commander les têtes magnétiques ;

la fig. 8 montre comment est organisée la mémoire d'étiquette ;

la fig. 9 représente un organigramme simplifié du déroulement de la procédure générant les signaux de commande des têtes magnétiques.

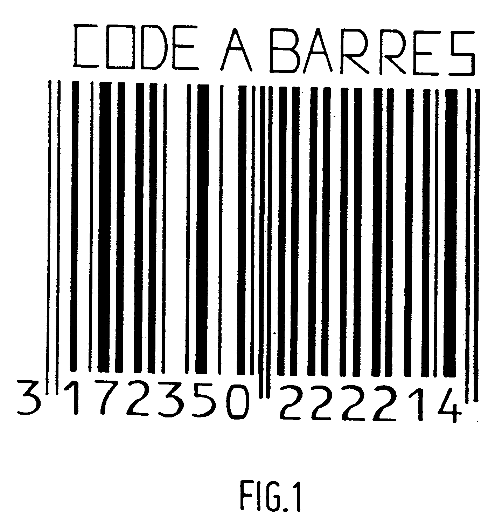

La fig. 1 à laquelle on fait maintenant référence représente à titre d'exemple le genre de codes à barres que l'on peut obtenir en mettant en oeuvre le procédé selon l'invention.

Les codes à barres dont l'emploi se généralise actuellement sont constitués par une série de traits de hauteur (0,5 cm à 2,5 cm en général) et de largeur variables (généralement autour de 200 à 500 µm) s'accompagnant de caractères numériques placés en-dessous desdites barres. Le code barres selon la norme européenne EAN est précédé, en alignement avec lesdits caractères numériques, d'un caractère supplémentaire indiquant le type de code à barres que l'on réalise. Dans le mode de réalisation qui sera décrit par la suite, il est également prévu un dispositif permettant d'écrire des caractères alphanumériques au-dessus du code. Il serait ainsi possible par exemple d'imprimer à cet endroit un message publicitaire.

De manière générale, les ensembles de barres formant le code sont délimités de part et d'autre par un séparateur latéral formé de deux barres généralement plus fines que les autres et qui se distinguent des autres en ce qu'elles descendent plus bas, entourant ainsi partiellement les caractères numériques qui figurent en-dessous du code à barres. De même, il est prévu un séparateur central formé également de deux barres descendant au même niveau que celles formant les séparateurs latéraux.

Ces codes à barres donnent des indications sur le propriétaire de la marque, sur le code de l'article attribué par le fabriquant et sont disposés soit sur une étiquette apposée sur le produit, soit directement sur l'emballage du produit.

La lecture s'effectue en balayant le code à barres avec un crayon optique ou laser dont le passage génère en fonction de la lumière réfléchie un courant proportionnel à la largeur des barres noires et blanches. Tout défaut dans l'impression des barres (densité, largeur ...) entraîne inévitablement une erreur de lecture, d'où la nécessité d'écrire exactement les largeurs de barres souhaitées.

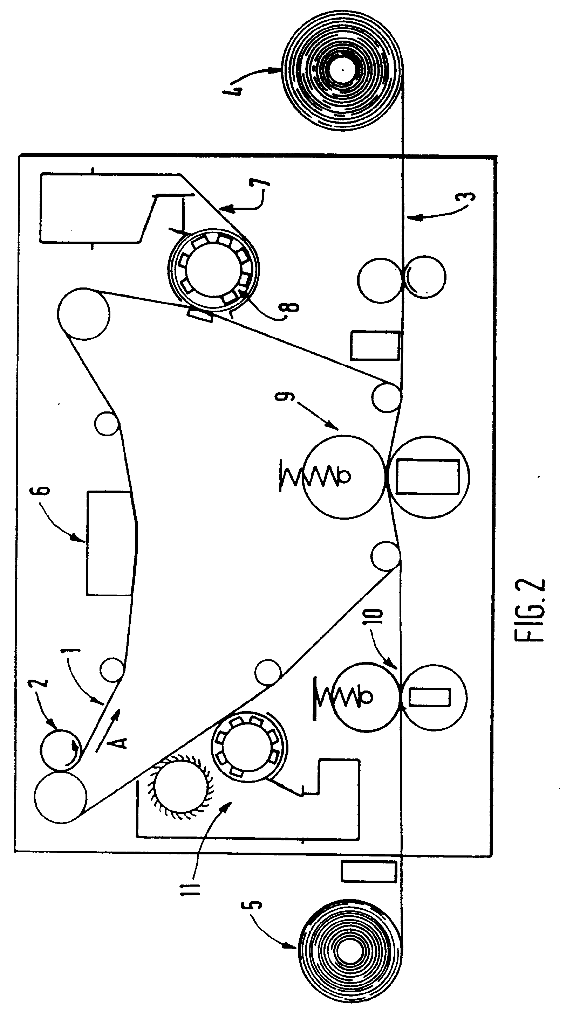

La fig. 2 à laquelle on fait maintenant référence représente de manière simplifiée un exemple d'appareil utilisable pour la mise en oeuvre du procédé selon l'invention.

Cet appareil comprend les parties suivantes :

a) une bande magnétique 1 formant une courroie sans fin entraînée dans le sens de la flèche A par un moteur que l'on représente pour simplifier par une poulie 2 ; la bande est guidée sur son parcours par des rouleaux placés en divers endroits de ladite bande ;

b) une bande papier 3 sur laquelle on imprime le code à barres. Cette bande est fournie par un distributeur en rouleau 4, est entraînée par un moteur que l'on représente par une poulie, passe devant une station de transfert 9 et de fixage 10 et est enfin enroulée sur un rouleau de réception 5 ;

c) une station d'écriture et d'effacement 6 comprenant l'agencement de têtes magnétiques qui fera l'objet d'une description plus détaillée par la suite. C'est dans cette station que l'on forme sur la bande magnétique des gradients de champ représentatifs d'une image latente développable par un pigment développateur ;

d) une station de développement 7 comprenant une réserve de particules de pigment développateur au contact-de laquelle passe un tambour rotatif 8 muni sur une partie de sa périphérie interne d'aimants fixes en nombre impair. Les particules sont entraînées par la partie magnétisée du tambour et ensuite, en absence de magnétisation, sont libérées sur la bande magnétique passant au contact dudit tambour. Les particules de pigment développateur sont alors attirées sur les gradients de champ formés sur ladite bande magnétique. Cette station comprend un dispositif générant sur le support des vibrations (composé par exemple d'un piézo-électrique) et permettant d'éliminer les particules localisées entre les informations à développer ;

e) une station de transfert 9 où la bande magnétique est amenée en contact avec la bande papier. Dans cette station, on provoque par pression le transfert si possible de la totalité des particules de pigment développateur de la bande magnétique sur la bande papier ;

f) une station de fixage 10, dans laquelle on provoque la fusion des particules de pigment développateur de manière à les fixer définitivement sur la bande papier ;

g) une station de nettoyage 11, comprenant une brosse magnétique à noyau tournant et une brosse mécanique, de manière à démagnétiser la bande et à enlever les particules de pigment développateur résiduelles. Après cette étape, le dispositif est alors prêt pour un nouveau cycle d'impression.

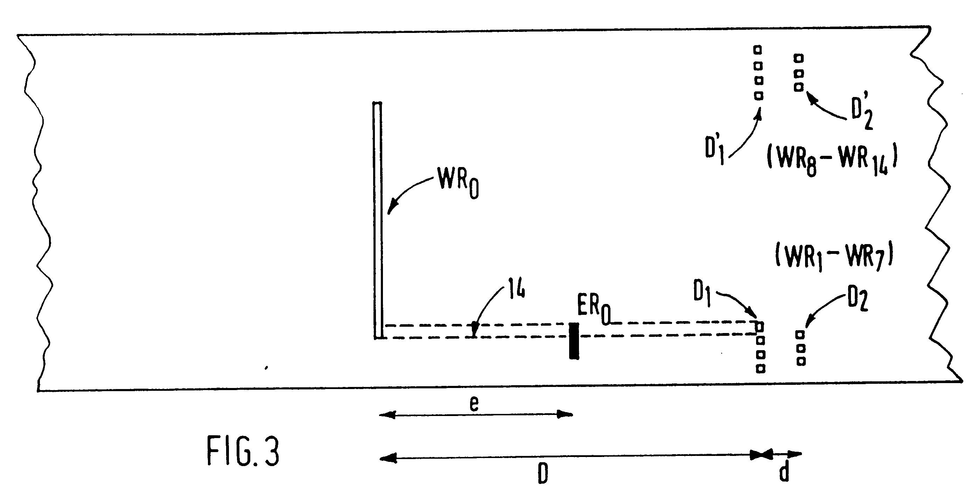

La fig. 3, à laquelle il est maintenant fait référence, montre une disposition possible des têtes magnétiques pour la mise en oeuvre du procédé selon l'invention. Cet agencement de têtes magnétiques comporte :

– une tête d'écriture $WR_o$ permettant de réaliser les , codes à barres proprement dits ;

– une tête d'effacement $ER_o$ permettant d'effacer les barres sur une hauteur souhaitée afin de pouvoir insérer sous le code les caractères numériques désirés. Cette tête d'effacement sera pilotée de manière à ne pas effacer les barres formant les séparateurs latéraux et le séparateur central ;

– un premier ensemble comprenant sept têtes d'écriture disposées ainsi :

– une première barette $D_1$ comportant quatre têtes magnétiques ($WR_1$ - $WR_4$) enregistrant ainsi quatre pistes parallèles ;

– une seconde barette $D_2$ décalée par rapport à $D_1$ et comportant trois têtes ($WR_5$ -$WR_7$) magnétiques disposées en alternance par rapport à celles de $D_1$.

Cet ensemble permet l'écriture des caractères numériques en-dessous du code à barres ;

– un second ensemble comprenant également sept têtes d'écriture disposées de la même manière que celles du premier groupe décrit ci-dessus à savoir :

– une barette $D'_1$ comportant quatre têtes d'écriture ($WR_8$-$WR_{11}$)

– une seconde barette $D'_2$ décalée par rapport à $D'_1$ et comportant trois têtes disposées en alternance par rapport à celles de $D'_1$ ($WR_{12}$-$WR_{14}$).

Cet ensemble permet l'écriture de caractères alphanumériques au-dessus du code à barres.

Le dispositif utilisé pour gérer ces seize têtes magnétiques (quinze d'écriture $WR_o$...$WR_{14}$ et une tête d'effacement $ER_o$) sera décrit plus en détail par la suite.

Il est bien évident que cette disposition des têtes magnétiques n'est pas limitative. En effet, il peut être prévu par exemple une tête supplémentaire d'effacement disposée au-dessus de la première tête d'effacement. Cette tête, mobile transversalement, permettrait de moduler la hauteur du code à barres en causant l'effacement de la partie supérieure souhaitée dudit code à barres.

De même, il peut être prévu une tête d'effacement occupant toute la largeur de la bande magnétique ; cette tête d'effacement, disposée avant l'ensemble de têtes décrit ci-dessus, permettrait de réaliser ou parfaire l'effacement de la bande magnétique avant l'écriture d'une nouvelle information.

Les figures auxquelles il est maintenant fait référence, illustrent la façon dont est formé le signal que l'on applique aux têtes magnétiques.

A cet égard, il faut différencier les têtes d'écriture de la tête d'effacement.

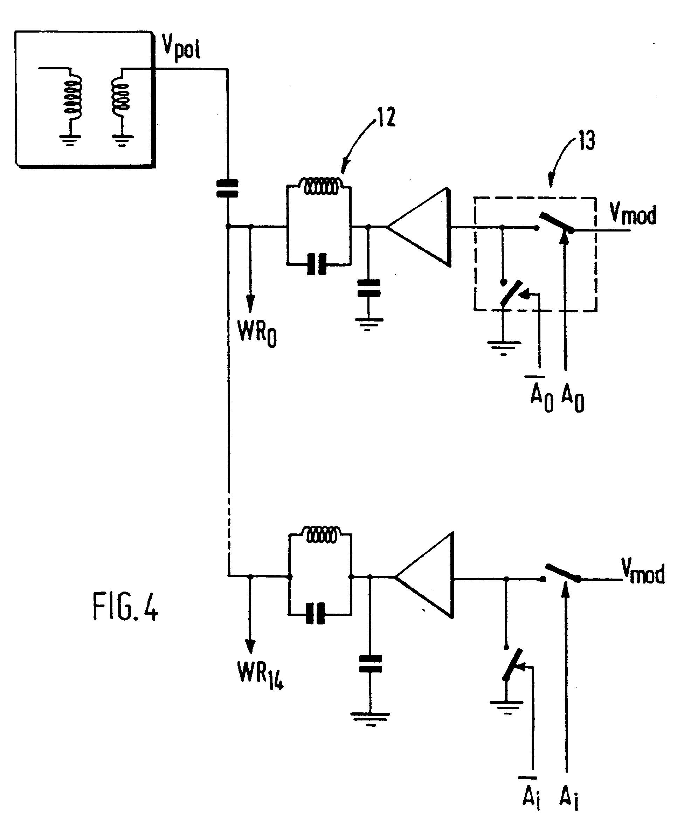

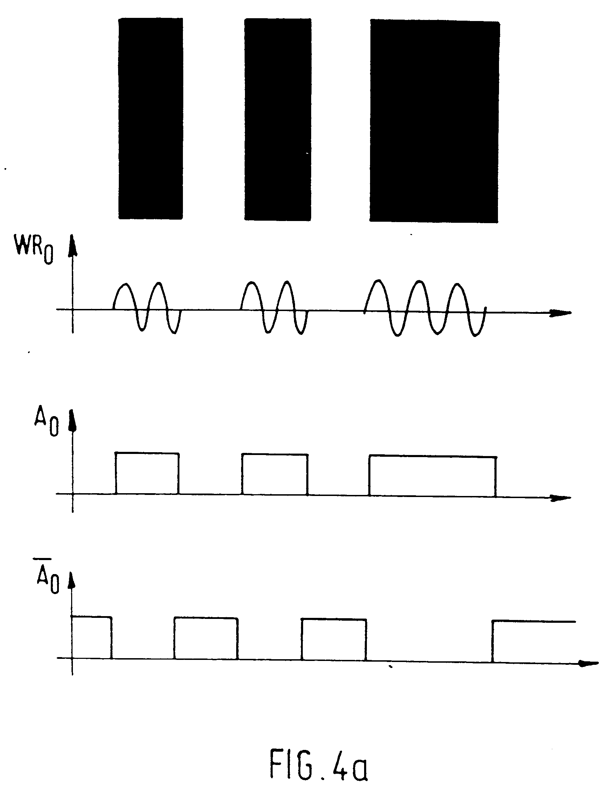

La fig. 4 est relative aux têtes d'écriture ($WR_0$-$WR_{14}$). Dans le mode de réalisation qui va être décrit pour la mise en oeuvre du procédé selon l'invention, on utilise un enregistrement longitudinal (par opposition à un enregistrement perpendiculaire). Le diamètre moyen des particules de pigment développateur est de 25 $\mu$m et la longueur d'onde du signal enregistré est de 100 $\mu$m. Il est évident que, pour des tailles de particules différentes, on doit utiliser des longueurs d'ondes différentes, la condition optimale pour obtenir un bon développement étant d'avoir une longueur d'onde environ trois fois supérieure à la taille des particules. Ainsi, suivant l'épaisseur du trait que l'on désire, obtenir on enregistrera 1, 2, ... n longueurs d'ondes. De plus, le code à barres étant une suite de traits plus ou moins fins pouvant être très près les uns des autres, il est nécessaire d'enregistrer sur la bande magnétique des sinusoïdes parfaites ayant des longueurs d'ondes très précises. Cette précision dans le signal enregistré est indispensable pour pouvoir ensuite permettre une lecture exacte dudit code. A cet effet, le signal que l'on envoie aux têtes d'écriture est obtenu par superposition de deux composantes :

– Un signal de polarisation $V_{pol}$ destiné à linéariser le matériau d'enregistrement permettant ainsi d'améliorer la qualité du signal enregistré et donc d'améliorer la définition du code à barres. Ce signal de polarisation, dont la fréquence est d'environ 80 kHz et dont l'amplitude crête à crête est de l'ordre de 200 à 300 V, est obtenu dans un étage de puissance traditionnel.

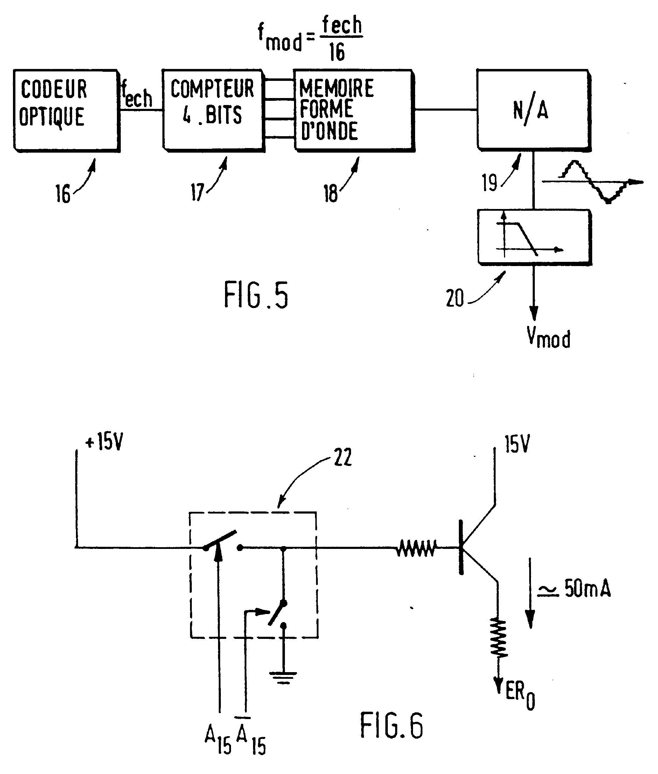

– Un signal de modulation $V_{mod}$ dont la frequence $F_{mod}$ varie entre 100 Hz et 10 kHz en fonction de la vitesse de défilement de la bande magnétique et dont l'amplitude crête à crête varie entre 2 et 15 V. La fig. 5 à laquelle on fait maintenant référence illustre la manière dont on génère ce signal de modulation. Un codeur optique 16 placé sur la poulie d'entraînement de la bande magnétique génère une fréquence d'échantillonnage, $f_{ech}$, liée à la vitesse de défilement V de la bande par la relation suivante $f_{ech} = kV$ où k est une constante de proportionnalité. Cette fréquence d'échantillonnage est divisée par 16 dans un compteur 4 bits, 17. On obtient ainsi une fréquence de modulation $f_{mod} = f_{ech}/16$. On entre alors ce signal dans une mémoire à forme d'onde 18 dans laquelle est stockée la forme du signal (dans notre exemple : un sinusoïde). Ce signal est alors remis sous forme analogique au moyen d'un convertisseur numérique-analogique 19 à partir duquel on passe dans un filtre passe-bas 20 pour la mise en forme finale du signal de modulation $V_{mod}$; lors de cette phase de remise en forme du signal, on prévoit une préaccentuation permettant de moduler le signal en fonction de la fréquence de telle sorte que l'on ait une magnétisation constante quelle que soit la fréquence du signal. On obtient ainsi un signal parfaitement sinusoïdal dont la longueur d'onde est :

$$\lambda_{mod} = \frac{V}{f_{mod}} = \frac{V.16}{f_{ech}} = \frac{V.16}{k.V} = \frac{16}{k}$$

ainsi, en choisissant convenablement la constante de proportionnalité k, il est possible, quelle que soit la vitesse de défilement de la bande, d'obtenir exactement la longueur d'onde souhaitée à savoir, dans le cas de notre mode de réalisation : 100 µm.

On fait maintenant à nouveau référence à la fig. 4, laquelle montre comment sont combinés les signaux de polarisation $V_{pol}$ et les signaux de modulation $V_{mod}$. Pour chaque tête d'écriture ($WR_0$- $WR_{14}$), on ajoute le signal de modulation au signal de polarisation $V_{pol}$ par l'intermédiaire "d'un filtre-trap" 12. Ce "filtre-trap" est un circuit qui, vu du côté du signal de polarisation, présente une impédance infinie, alors que vu du côté du signal de modulation, il présente une impédance très faible. En faisant ainsi, on évite que le signal de modulation soit pollué par le signal de polarisation.

Chaque tête d'écriture a son signal de modulation commandé par un dispositif d'interrupteurs analogiques 13, eux-mêmes pilotés par des signaux générés par un ordinateur.

Lorsque l'interrupteur commandé par $A_i$ (O=<i<=14) est fermé, l'autre commandé par $\overline{A_i}$ est ouvert. Ainsi, on envoie sur les têtes d'écritures choisies le nombre de longueurs d'ondes souhaité. Dans le cas inverse, c'est-à-dire dans l'hypothèse où aucun signal ne doit être envoyé sur la tête d'écriture, l'interrupteur commandé par $A_i$ est ouvert tandis que celui commandé par $\overline{A_i}$. est fermé.

La fig. 4a illustre à titre d'exemple ce qui a été dit ci-dessus appliqué à la tête d'écriture $WR_0$.

La fig. 6 à laquelle on fait maintenant référence illustre la façon dont est généré le signal que l'on envoie à la tête d'effacement $ER_0$.

Pour alimenter cette tête d'effacement $ER_0$, un signal continu suffit, un signal pour lequel l'intensité du courant est de l'ordre de 50 mA. Comme pour les têtes d'écriture, le signal envoyé à la tête d'effacement est commandé par un système d'interrupteurs analogiques 22 eux-mêmes pilotés par des signaux générés par un ordinateur.

Lorsque l'interrupteur commandé par le signal $\overline{A_{15}}$ est fermé, l'autre commandé par $A_{15}$ est ouvert. Ainsi, on envoie sur la tête le signal d'effacement. Dans le cas inverse, aucun signal n'est envoyé sur ladite tête d'effacement.

Ainsi, au regard de ce qui a été dit précédemment en faisant référence aux fig. 4, 4a, 5 et 6, il apparaît qu'il nous faut maintenant commander quinze têtes d'écriture et une tête d'effacement. Pour cela, il nous faut générer seize signaux de commande $A_0$ à $A_{15}$. Les signaux complémentaires $\overline{A_0}$ à $\overline{A_{15}}$ étant obtenus directement à l'aide d'un simple inverseur.

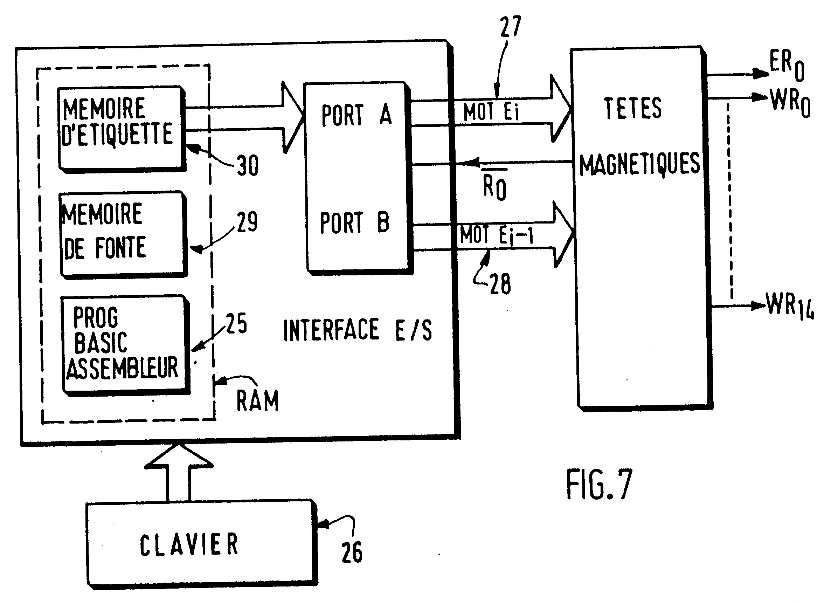

La fig. 7 à laquelle on fait maintenant référence montre sous forme de diagramme l'architecture du système utilisé , pour commander les têtes magnétiques.

Les moyens principaux pour la mise en oeuvre du procédé selon l'invention peuvent être répartis en trois groupes :

1) Une partie logiciel 25 comprenant par exemple un programme en basic et un programme en assembleur. Le programme en basic est destiné à gérer le dialogue entre l'opérateur et le système (affichage du menu + saisie des paramètres). Les paramètres sont saisis et envoyés dans une zone mémoire à laquelle le programme assembleur aura accès. Le programme assembleur récupère ces paramètres et effectue un mappage, c'est-à-dire une représentation binaire de l'étiquette à imprimer.

2) Des dispositifs de communication avec l'extérieur. Il s'agit :

a) de la communication avec l'opérateur gérée par le programme basic, lequel programme basic demande à l'opérateur d'entrer grâce au clavier 26 divers paramètres d'impression. Dans un mode de réalisation préférentiel, on demande à l'opérateur d'entrer le code proprement dit et les commentaires qui doivent éventuellement figurer au-dessus du code ; on lui demande également d'entrer la longueur d'onde choisie, la largeur du module (le module étant la largeur unité des barres formant le code, c'est-à-dire la plus petite barre que l'on veut réaliser), la longueur de l'étiquette.

b) De la communication entre l'ordinateur et les têtes magnétiques. Cette communication est assurée, dans un sens (ordinateur → têtes magnétiques) par deux ports de 8 bits 27, 28 d'un P.I.A. (adaptateur d'interface périphérique) par lesquels seront envoyées les données à imprimer, et dans l'autre sens (têtes magnétiques → ordinateur) par un signal de contrôle $\overline{RD}$ indiquant que les têtes magnétiques sont prêtes à recevoir une nouvelle information. Mais il est possible de prévoir des variantes à ce système. Il est en effet possible de prévoir d'autres . signaux de contrôle permettant par exemple de contrôler les moteurs d'entraînement, la tension des bandes, ou l'état de la réserve en particules de pigment développateur.

3) Une zone de mémoire vive qui comprend entre autres :

— Une mémoire de fonte 29 contenant le code ASCII des caractères et codes à imprimer. Cette mémoire sera utilisée pour générer le mappage de l'étiquette ;

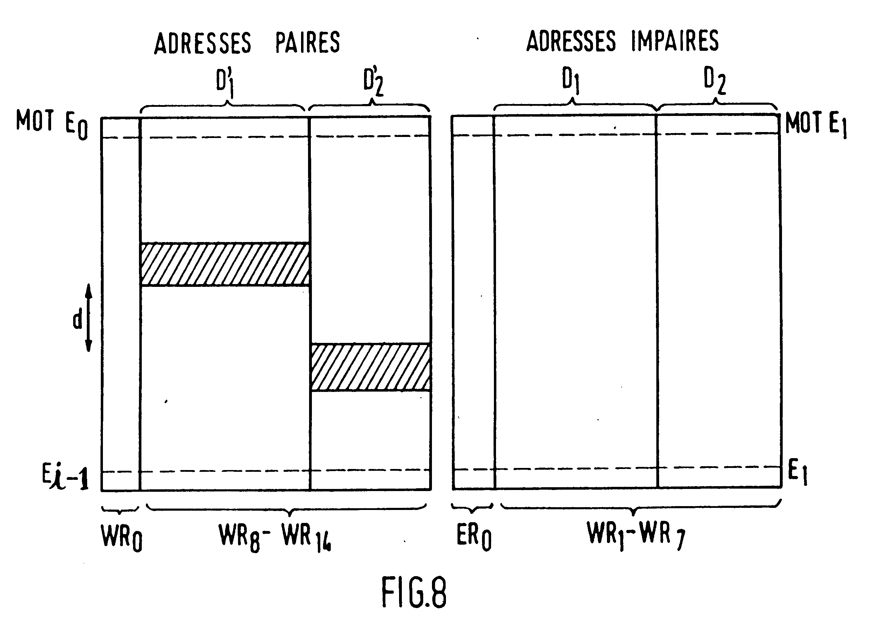

— Une mémoire d'étiquette 30 qui contient une représentation binaire de l'étiquette à réaliser. La fig. 8 montre comment cette zone mémoire est organisée. Pour la clarté des explications, on représente cette zone sous forme de deux zones de 8 bits juxtaposées, l'une correspondant aux adresses paires (mot $E_{i-1}$), l'autre correspondant aux adresses impaires (mot $E_i$). Le bit de poids fort de la première zone correspond au signal de commande de la tête d'écriture $WR_0$ ; le bit de poids fort de la deuxième zone correspond au signal de commande de la tête d'effacement ER ; les sept autres bits de la première et deuxième zone servent respectivement à commander les têtes d'écriture $WR_8$ -$WR_{14}$ et $WR_1$ - $WR_7$.

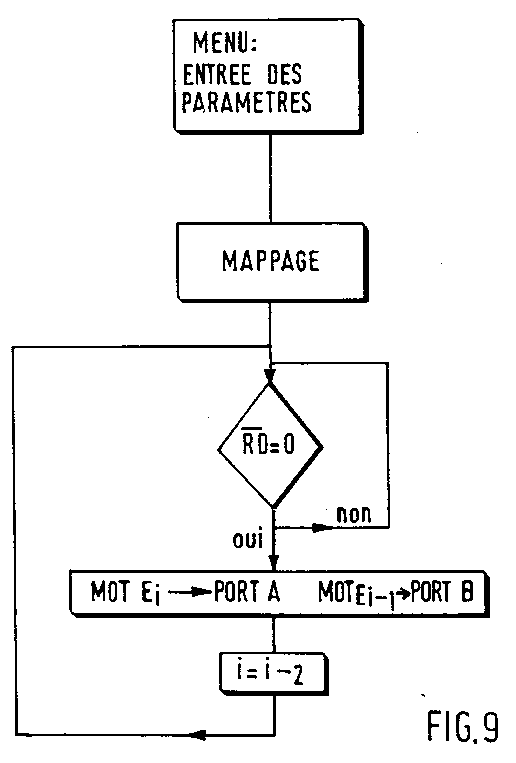

Dans un mode de réalisation possible, on divise la longueur de l'étiquette en zones dont la largeur est égale à la longueur d'onde choisie, soit 100 µm. Ainsi, à chaque partie de l'étiquette de 100 µm, on associe deux mots de 8 bits stockés à deux adresses successives de la mémoire d'étiquette (l'une paire, l'autre impaire), ces deux mots contenant le signal de commande appliqué à chacune des 16 têtes magnétiques sur une zone de 100 µm. De plus, les têtes d'écriture étant décalées dans l'espace (cf : fig. 3) d'un nombre entier de longueurs d'ondes, il faut tenir compte de ce décalage lorsqu'on réalise la représentation binaire de l'étiquette. Si on prend l'exemple de deux barettes $D'_1$ et $D'_2$ , séparées d'une distance d, pour obtenir les caractères numériques correctement imprimés, il nous faut décaler les données relatives à $D'_2$ d'un nombre d'adresses égal à d/100 µm. Toutes ces opérations relatives à la réalisation de ce mappage de l'étiquette sont effectuées par le programme en assembleur. La fig. 9 est un organigramme simplifié, illustrant le déroulement de la procédure générant les signaux de commande pour chaque tête magnétique. Les différents paramètres d'impression, entrés par l'opérateur, sont saisis par le programme basic qui les transfère dans une zone accessible au programme en assembleur. Celui-ci génère, à partir de ces paramètres, une représentation binaire de l'étiquette à imprimer en commençant par la première adresse de la mémoire d'étiquette. Ensuite, lorsque l'ordre lui en sera donné (lorsque le signal de contrôle $\overline{RD}$ = 0), le microprocesseur ira chercher dans la mémoire d'étiquette en commençant par la dernière adresse, le mot $E_i$ contenant les signaux de commande des têtes $ER_0$ et $WR_1$ - $WR_7$ pour les mettre sur le PORT A du PIA et ira chercher le mot $E_{i-1}$ contenant les signaux de commande des têtes $WR_0$ et $WR_8$ - $WR_{14}$ pour les mettre sur le PORT B du PIA, lesquels mots seront alors envoyés sur les différentes voies alimentant les têtes magnétiques correspondantes. On recommence alors l'opération jusqu'à ce que l'on ait balayé toute la zone mémoire correspondant à ladite étiquette. Une fois l'image latente correspondant à une étiquette enregistrée, on recommence l'enregistrement de l'image latente correspondant à l'étiquette suivante et ainsi de suite. Dans le même temps, la rotation de la bande permet de faire passer cette image latente dans les divers postes de la machine et d'obtenir ainsi le report d'une image visible sur la bande papier 3.

Ainsi à l'aide du dispositif qui vient d'être décrit, il est possible de mettre en oeuvre le procédé selon l'invention;

A titre d'exemple, si on veut réaliser des codes à barres du type de celui décrit en figure 1 (norme EAN), à l'aide de l'agencement de têtes décrit en figure 3, commandées de la manière décrite ci-dessus, on procèdera de la manière suivante.

a) A l'aide du groupe de têtes $WR_1$-$WR_7$, on enregistre l'image latente du premier caractère indiquant le type de code à barres que l'on va réaliser.

b) on commande la tête $WR_0$ pour l'impression des traits formant le code

c) On commande la tête $ER_0$ de manière à effacer au moins la zone d'écriture 14 commune aux têtes $WR_0$ et $WR_1$-$WR_7$ sans affecter les séparateurs latéraux ainsi que le séparateur central qui eux doivent conserver leur longueur initiale.

d) On forme l'image latente des caractères numériques sous le code barres à l'aide des têtes $WR_1$-$WR_7$ et éventuellement, s'il y à lieu, à l'aide des têtes $WR_0$-$WR_{14}$, on forme l'image latente des commentaires devant figurer au-dessus dudit code à barres.

## Revendications

1. Procédé de formation sur une bande magnétique, d'une image latente, à l'aide d'un assemblage de têtes magnétiques d'effacement et de têtes magnétiques d'enregistrement, ledit procédé étant caractérisé en ce que pour former une image latente composée de deux séries d'informations, l'une étant au moins partiellement imbriquée dans l'autre et ce, au cours d'un seul passage de la bande magnetique devant les têtes, le procédé comprend les étapes suivantes :

a) l'enregistrement d'une première information sur une surface donnée de la bande magnétique ;

b) l'effacement, dans la zone d'imbrication des deux séries d'informations, d'une partie de l'information écrite au cours de l'étape (a) ;

c) l'enregistrement d'une seconde information dont au moins une partie se trouve dans la zone effacée au cours de l'étape (b).

2. procédé selon la revendication 1, dans lequel l'information enregistrée au cours de l'étape (a) est du type code à barres.

3. procédé selon la revendication 2, dans lequel la première série d'informations contient des informations de contrôle ayant une longueur plus grande que l'information elle-même, l'effacement réalisé lors de l'étape b) n'affectant pas les informations de contrôle.

4. procédé selon la revendication 1, dans lequel l'information enregistrée au cours de l'étape c) est du type alphanumérique.

5. procédé selon la revendication 1, caractérisé en ce que l'on forme l'image latente, en continu, à une vitesse comprise entre 20 et 100 cm/s.

6. Appareil pour la mise en oeuvre du procédé selon l'une quelconque des revendications 1 à 5, comportant au moins trois têtes magnétiques dont au moins une d'effacement et deux d'enregistrement caractérisé en ce que ladite tête d'effacement est disposée de manière à effacer la zone d'écriture (14) commune à au moins deux têtes d'enregistrement.

**Patentansprüche**

1. Verfahren zur Herstellung eines latenten Bildes auf einem magnetischen Band mittels einer Mehrzahl von Lösch- und Aufzeichnungs-Magnetköpfen, dadurch gekennzeichnet , daß zur Erstellung eines latenten Bildes, das aus zwei Informationsgruppen besteht, die sich teilweise überdecken und während einer einzigen Bewegung des Bandes an den Köpfen vorbei aufgezeichnet werden, in mehreren Schritten

a) eine erste Art von Informationen auf einem definierten Bereich des magnetischen Bandes aufgezeichnet wird,

b) in dem sich überdeckenden Bereich der beiden Informationsgruppen mindestens ein Teil der während Schritt a) aufgezeichneten Informationen gelöscht wird, und

c) eine zweite Art von Informationen aufgezeichnet wird, von denen sich mindestens ein Teil in dem während Schritt b) gelöschten Bereich befindet.

2. Verfahren nach Anspruch 1, dadurch gekennzeichnet, daß es sich bei den während Schritt a) aufgezeichneten Informationen um Barcode-Informationen handelt.

3. Verfahren nach Anspruch 2, dadurch gekennzeichnet, daß die erste Informationsgruppe Steuerinformationen enthält, die länger sind als die Informationen selbst und die durch die während Schritt b) stattfindende Löschung nicht modifiziert werden.

4. Verfahren nach Anspruch 1, dadurch gekennzeichnet, daß es sich bei den während Schritt c) aufgezeichneten Informationen um alphanumerische Informationen handelt.

5. Verfahren nach Anspruch 1, dadurch gekennzeichnet, daß das latente Bild in einem kontinuierlichen Vorgang mit einer Geschwindigkeit entsteht, die zwischen 20 cm/s und 100 cm/s liegt.

6. Gerät zur Durchführung des Verfahrens nach einem der Ansprüche 1 bis 5, mit mindestens drei Magnetköpfen, die aus mindestens einem Lösch- und zwei Aufzeichnungs-Magnetköpfen bestehen, dadurch gekennzeichnet, daß der Lösch-Magnetkopf so angeordnet ist, daß er den Aufzeichnungsbereich (14) löscht, der mindestens zwei Aufzeichnungs-Magnetköpfen gemeinsam ist.

**Claims**

1. A process to form on a magnetic web a latent image by means of on assembly of erasing and recording magnetic heads, said process being characterized in that, in order to form a latent image comprising two series of information, at least partially overlapping each other, and recorded during a single passage of the web in front of said heads, it comprises the following stages :

a) the registration of a first type of information on a defined area of the magnetic web

b) the erasing, in the overlapping area of the two series of information, of at least one part of the said information registred during stage a)

c) the registration of a second type of information, a part of which, at least, being in the area erased during stage b).

2. A process according to claim 1 wherein the information registered during stage a) is of the bar-code type

3. A process according to Claim 2, wherein said first series of information comprises control information, the length of which is longer than the information itself, said control information being not modified by the erasing realized during stage b)

4. A process according to claim 1 wherein the information registered during the step c) is of the alphanumerical type

5. A process according to claim 1 characterized in that the latent image is carried out in a continuous operation, at a speed varying from 20 cm/s to 100 cm/s

6. An apparatus to perform the process according to any of claims 1 to 5 comprising at least three magnetic heads with at least one erasing head and two recording heads characterized in that said erasing head is disposed so as to erase the writing area (14) common to, at least, two recording heads.

FIG.1

FIG.2

FIG.3

FIG.4

FIG.4a

$$f_{mod} = \frac{fech}{16}$$

CODEUR OPTIQUE $\xrightarrow{\text{fech}}$ COMPTEUR 4 .BITS — MEMOIRE FORME D'ONDE — N/A

16    17    18    19

20

$V_{mod}$

FIG.5

+15V    22    15V

$\simeq 50mA$

$ER_0$

$A_{15}$  $\overline{A}_{15}$    FIG.6

FIG.7

MEMOIRE D'ETIQUETTE — 30

MEMOIRE DE FONTE — 29

PROG BASIC ASSEMBLEUR — 25

RAM

INTERFACE E/S

PORT A

PORT B

27

MOT $E_i$

$\overline{R_0}$

MOT $E_{i-1}$ — 28

TETES MAGNETIQUES

$ER_0$

$WR_0$

$WR_{14}$

CLAVIER — 26

FIG.8

MENU:
ENTREE DES
PARAMETRES

MAPPAGE

$\overline{RD}=0$

non

oui

MOT $E_i$ ⟶ PORT A    MOT $E_{i-1}$ ⟶ PORT B

$i = i - 2$

FIG.9